# EUROPEAN PATENT APPLICATION

(11) **EP 0 933 862 A1**
(43) Date of publication of application: **04.08.1999**
(21) Application number: 98107052.7
(22) Date of filing: 17.04.1998
(51) Int. Cl.: H02M 3/156, H04B 1/40, G05F 1/62

(54) **Power circuit**

(30) Priority: 02.02.1998 EP 98101752
(71) Applicant: Sony International (Europe) GmbH, 50829 Köln (DE)
(72) Inventor: Petersen, Tim Agergaard, 2635 Ishoj (DK); Ogawa, Naohiro, c/o Sony International (Europe), 85609 Aschheim (DE)
(74) Representative: Körber, Martin, Dipl.-Phys.

(57) **Abstract**

The present invention relates to a power circuit for supplying power to an intermittently operated amplification means (4), comprising a battery (1) having a full charged voltage lower than the operating voltage of the amplification means (4), a stepping up means (2) for stepping up the voltage of the battery (1) and a storing means (3) for storing the stepped up power and for supplying the stored power to said amplification means (4) only when said amplification means is operated. The power circuit further comprises a feedback loop for feedback controlling the stepped up voltage, said feedback loop comprising an activity detection means (6) for detecting the activity level of the stepping up means (2). The present invention also relates to a corresponding method for controlling a power circuit. In an ideal case of the invention, the current drawn from the battery is a pure DC current and the voltage has no ripple.

## Description

The present invention relates to a power circuit and to a method for controlling a power circuit for supplying power to an intermittently operated amplification means, comprising a battery having a full charged voltage lower than the operating voltage of the amplification means, a stepping up means for stepping up the voltage of the battery, and a storing means for storing the stepped up power and for supplying the stored power to said amplification means only when said amplification means is operated.

Such a power circuit is for example disclosed in the European patent application EP 0 613 257 A2. The disclosed power circuit operates in a time division multiplex communication system, for example a portable GSM telephone. The amplification means amplifies a signal intermittently transmitted at predetermined periods up to a radio transmission power level. The signal processing circuits in a GSM telephone are usually operated by a low voltage around 3V. The battery usually has an ultimate voltage around the operating voltage of the signal processing circuit, so that the signal processing circuit can be operated directly by the output voltage of the battery. The amplification means, which is used for amplifying the signals to be transmitted, however, has a driving or operating voltage, which is higher than the full charge voltage of the battery, since the signals have to be transmitted over a long distance. Therefore, the output voltage of the battery has to be stepped up in a stepping up means, which can be a DC/DC converter, for example up to 5V.

A storing means, for example a capacitor, is provided for storing the stepped up power, while the amplification means is not operated. The stored power in the storing means is supplied to the amplification means, when a signal transmission is performed. A time division multiplex communication system as for example the GSM system is a communication method, in which one time frame is divided into a plurality of time slots. A GSM phone transmits speach signals during a phone call only within one timeslot of a frame. In this time slot, the amplification means is operated to amplify and transmit signals to a corresponding base station. The power required during this time slot is provided to the amplification means from the power stored in the storing means, so that a large current free from the internal resistance of the battery can be supplied. Therefore, a battery having a comparatively low full charged voltage and thus having a light weight and a small size can be used and a power supply from the battery to an amplification means requiring a higher voltage can be efficiently carried out.

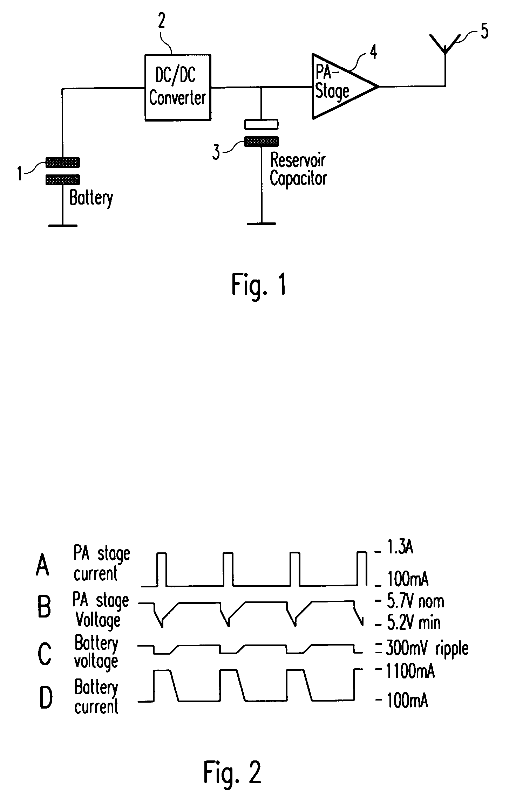

A GSM phone is usually based on a configuration comprising a battery 1, a storing means 2, for example a DC/DC converter, a storing means 3, for example a capacitor for storing the stepped up power and an amplification means 4, for example a RF power amplification stage, and an antenna 5 for transmitting and receiving signals, as shown in figure 1. The amplification means 4 draws a pulse current from the storing means 3, which is charged by a stepping up means 2. The stepping up means 2 again draws a similar pulse current from a battery, for example a single cell Li-ion cell. A DC/DC converter used in this known configuration comprises usually a current limiting means, which limits the peak current flowing through the coil of the DC/DC converter to avoid a saturation of the coil. The DC/DC converter can have an external current limiting terminal for a current adjustment by the user.

In such a known power circuit as described above and used in a GSM phone there is the problem that a pulsed current with a peak value of 1,0A to 1,3A is drawn from the battery, which results in a quite high ripple voltage over the battery. This results in difficulties to have a well defined telephone off/prohibit talk voltage level at the battery. This situation is shown in figure 2A to 2D. In figure 2A, the pulsed current drawn from the storing means 3 by the amplification means 4 is shown. While the base DC current level in the shown example is 100mA, the peak current is 1,3A. In figure 2B, the corresponding voltage drawn from the storing means 3 by the amplification means 4 is shown. The voltage drop from the nominal voltage to the minimum voltage in the shown example is 5,7V-5,2V=0,5V, which leads to a ripple voltage of 300mV drawn by the stepping up means 2 from the battery 1, which is shown in figure 2C. This quite high ripple voltage is accompanied by high current peak of 1,1A over a base DC current of 100mA, as shown in figure 2D. Additionally to the above-mentioned problems, a quite difficult load for the battery is given. Furtheron, an audible noise from the coil of the stepping up means 2 and coil induced fields into other components as for example a ringer loudspeaker are the result.

Because of the very big tolerance on the current used by the amplification means and because of worst case situations like an antenna mismatch, high/low temperature conditions or DC/DC efficiency tolerances, the current limiting terminal of the stepping up means 2 cannot be set to a peak current lower than approximately 1,0A through the coil. This is also caused by a battery input voltage change from 3,0V. The room for setting the current limit lower than 1A for current peaks will become minimal or critical. In case that a current is limited too hard, the amplification means supply voltage will drop to a level, which is too low to be acceptable for the amplification means.

Therefore, the object of the present invention is to provide a power circuit according to the preamble of claim 1 and a method for controlling a power circuit according to the preamble of claim 10 which overcome the above-mentioned problems encountered with the state of the art.

A further object of the present invention is to assure reduced or zero ripple in the voltage and the current drawn from the battery by the stepping up means.

The above and other objects are achieved by a power circuit according to claim 1 and a method for controlling a power circuit according to claim 10. The power circuit according to claim 1 is characterized by a feedback loop for feedback controlling the stepped up voltage, said feedback loop comprising an activity detection means for detecting the activity level of the stepping up means. The method for controlling a power circuit according to claim 1 is characterized by feedback controlling the stepped up voltage a means of detecting the activity level of the stepping up means. Thereby, the ripple in the voltage drawn from the battery by the stepping up means can be diminished, in an ideal case to zero. Correspondingly, the current drawn from the battery by the stepping up means can be smoothed and the current peaks can be diminished, in an ideal case a pure DC current is drawn from the battery. Furtheron, audible noise from the coil and coil induced fields can be prevented.

The activity level of the stepping up means can be detected by detecting a power switch switching rate or a control logic switching rate. The general principle is thereby to detect the activity level of the stepping up means, for example in form of a frequency, convert It into a usable physical signal, for example a voltage, and feed this back to the stepping up means. This physical signal can thereby be fed back to the current limit means of the stepping up means. The current limit means of the stepping up means adjusts the coil current so that the battery will be loaded by a pure DC current having no ripple current or ripple voltage in an ideal case.

Advantageous features of the present invention are defined in the corresponding subclaims.

Advantageously, the stepping up means comprises a current limiting means which is controlled by the feedback loop. The feedback loop can be implemented in the stepping up means or can be arranged around a known stepping up means. Further advantageously, the feedback loop further comprises an adjustment means supplied with a detected activity level from the activity detection means and with a reference signal for adjusting the stepped up voltage. The stepping up means can comprise a switch which is intermittently operated corresponding to the amplification circuit to switch the stepping up means on and off, whereby the activity detection means detects the activity level of the switch. Furtheron, the activity detection means can detect the activity level in form of a frequency and convert the detected frequency into a voltage. Also, the activity detection means can convert the detected frequency into any other usable physical signal which allows a feedback control of the stepped up voltage according to the present invention.

Advantageously, an averaging means is provided in the feedback loop between the activity detection means and the adjusting means. The averaging means can for example be a low pass filter. The stepping up means can be a DC/DC converter and the adjusting means can be an integrator or a PID controller.

The present invention is explained in detail in the following description by means of preferred embodiments relating to the enclosed drawings, in which
figure 1 shows a block diagram of a power circuit according to the state of the art,
figure 2A shows the current and figure 2B shows the voltage drawn from a storing means from an amplification means in a power circuit of the state of the art,
figure 2C shows a voltage and figure 2D shows a current drawn from a battery by a stepping up means of a power circuit according to the state of the art,
figure 3 shows a general block diagram of a power circuit according to the present invention,
figure 4A shows a current and figure 4B shows a voltage drawn from a storage means by an amplification means in a power circuit according to the present invention,
figure 4C shows a voltage and figure 4D shows a current drawn from a battery by a stepping up means in a power circuit of the present invention in an ideal case,
figure 5 shows a power circuit according to the present invention, in which the feedback loop is implemented in a stepping up means in form of a DC/DC converter,
figure 6 shows a power circuit according to the present invention, in which the feedback loop of the present invention is provided outside a known DC/DC converter, and
figure 7 shows a power circuit according to the present invention, in which the feedback loop of the present invention is provided outside a DC/DC converter using digital signal processing.

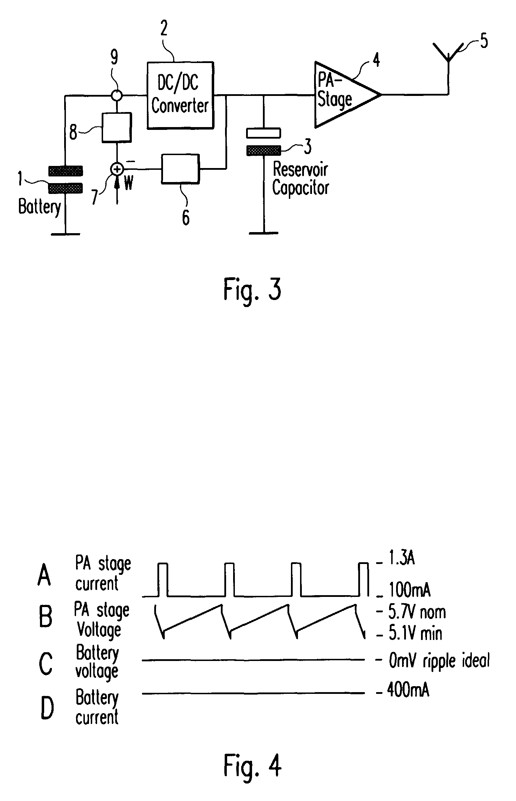

In figure 3, a principle block diagram of a power circuit according to the present invention is shown. A battery 1 is provided having a full charged voltage lower than the operating voltage of an amplification means in form of a power amplification stage 4. The stepping up means in form of a DC/DC converter 2 converts and steps the voltage drawn from the battery 1 up to the operating voltage of the power amplification stage 4.

The power circuit according to the present invention comprises an intermittently operated amplification means, as for example required in a GSM phone. The power amplification stage 4 is therefore not operated continuously, but amplifies signals to be transmitted via an antenna 5 only in assigned time slots.

The stepped up voltage from the DC/DC converter or the corresponding power is stored in a storing means in form of a capacitor 3. The power amplification stage 4 draws the required operating voltage from the capacitor 3, so that the time required for operating the power amplification stage 4 can be shortened and a large current free from the internal resistance of the battery 1 can be supplied.

The DC/DC converter 2 is operated with a corresponding timing as the power amplification stage 4. Each time when the power amplification stage 4 is operated and draws a current or a voltage, respectively, from the capacitor 3, the capacitor 3 is reloaded by the DC/DC converter 2. In the state of the art, this resulted in the current and voltages shown in figure 2, in which the pulsed peak currents caused from the intermittent operation of the power amplification stage 4 caused the DC/DC converter 2 to draw a corresponding pulsed peak current from the battery 1, which led to a quite high ripple voltage drawn from the battery 1.

The power circuit according to the present invention is controlled by means of a feedback loop. The feedback loop comprises an activity detection means 6.

The amplification means 6 detects the activity level of the DC/DC converter 2 in form of a frequency and transforms this frequency into a voltage. This voltage is substracted from a reference voltage W in an adder means 7. The resulting signal is error corrected in an adjusting means, which can for example be an intergrator or a PID controller. The output of the adjusting means 8 is fed back and added to the output voltage of the battery 1 in an adding means 9 in front of the DC/DC converter 2.

In an ideal case, the battery 1 will be loaded by a pure DC current having no ripple current and no ripple voltage, as can be seen in figure 4C and 4D. In figure 4A, the current drawn from the capacitor 3 by the power amplification means 4 is shown. This current is a pulsed current with current peaks up to 1,3A over a contiuous current of 100mA. It is to be noted, that the given values in figure 4 are only exemplary. The corresponding voltage drawn from the capacitor 3 by the power amplification stage 4 is shown in figure 4B. As can be seen in the figure, in an ideal case the voltage drawn by the power amplification stage 4 from the capacitor 3 has a pure triangular wave form with a nominal voltage of 5,7V at the peaks and a minimum voltage of 5,1V. The corresponding voltage drawn from the battery 1 by the DC/DC converter 2 is a pure DC current with 0V ripple voltage and for example a continuous current of 400mA, as shown in figure 4C and 4D.

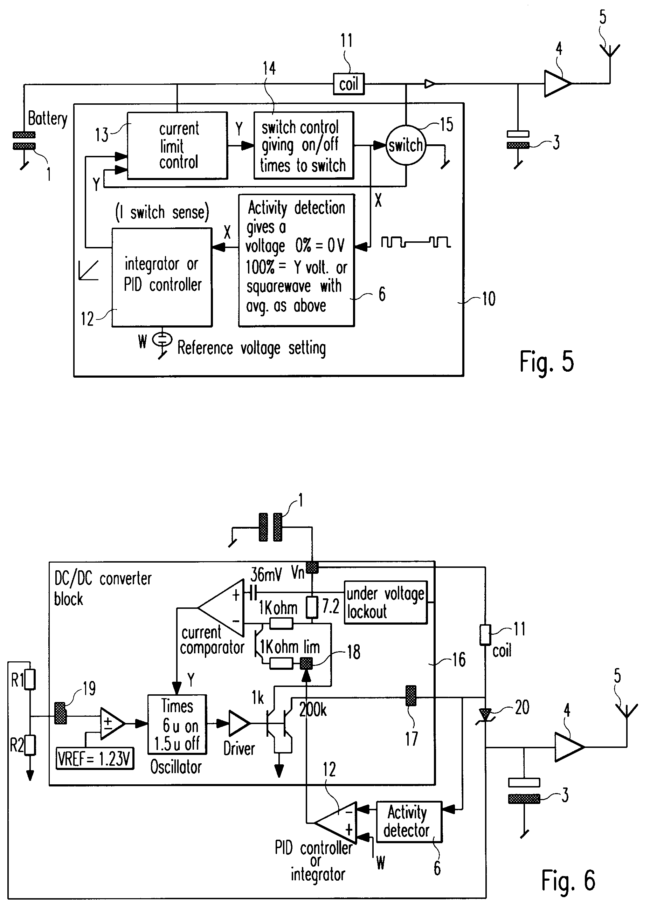

The ideal case shown in figure 4 is the case, in which the reference voltage W is set to a voltage level, which corresponds to the voltage level of a 100% activity after intergration. The activity detection means 6 detects the raising edges and converts this into a signal with an averaged DC level which is directly linear to the activity level. In the embodiments shown in the figures 5, 6 and 7 the signal output from the adjusting means 8 is fed back and used to set the current limit of the coil of the DC/DC converter 2. The adjusting means 8 is thereby a PID controller or an integrator, which makes sure that the coil current limit is adjusted to a current level, which is set by means of the reference voltage W. The feedback control loop keeps this current level stable at the selected value. The result is that the current level stays exactly where it is set regardless of the power amplification stage current, the battery voltage level or other factors.

In the embodiment shown in figures 5, 6 and 7, the detection of the activity level is performed by detecting the switching rate of the power switch of the DC/DC converter 2 or by detecting the switching rate of the control logic of the DC/DC converter 2. The activity detection means 6 only changes its output on raising flanks making the activity detection independent on both DC levels in the switch point and also independent on the duty cycle of the switch point. The adjusting means 12 can be any kind of an adjusting means, in the embodiments shown in figure 5, 6 and 7, a PID controller or an integrator are used. The time constant of the feedback loop has to be set depending on the clock on/off times for the switch of the DC/DC converter 2 and the GSM time frame.

In figure 5, a block diagram of a power circuit for a feedback control inside a DC/DC converter means 10 is shown. The DC/DC converter means 10 comprises a current limit control means 13, which is controlling the current drawn from the battery 1 by the DC/DC converting means 10. The current limit control means 13 is connected to a switch control means 14 controlling the on/off times of a switch 15. The switch 15 thus operates to switch the DC/DC converting means 10 on and off to charge the capacitor 3 with stepped up power. The activity detection means 6 detects the activity of the switch control means 14, converts the detected frequency into a voltage between 0V for 0% activity and a maximum voltage for 100% activity and supplies the resulting voltage to an integrator or PID controller 12. The reference voltage is supplied to the integrator or PID controller 12 to set and to control the current limit in the current limit control means 13. A signal representing the switch sense is supplied from the switch 15 to the current limit control means 13. The current limit of the coil 11 is thus adjusted to a pure DC current in the ideal case.

In figure 6, a block diagram of a power circuit with a feedback loop outside an existing DC/DC converter 16 is shown. The DC/DC converter 16 is an exsisting commercially available DC/DC converter comprising a power switch output terminal 17, a current limit input terminal 18 and a input terminal 19 for a signal representing the switch sense. The activity detector 6 is conntected to the power switch output terminal 17 and supplies the detected activity in form of a voltage to a PID controller or integrator 12. The PID controller or integrator 12 is supplied with the reference voltage W and supplies a correspondingly adjusted signal to the current limit input terminal 18 to control the current limit of the coil 11 correspondingly. A Zener diode 20 is provided after the connecting point of the power switch output the the coil 11. The output of the Zener diode 20 is connected to the input terminal 19 and further to the capacitor 3 and a power amplification stage 4.

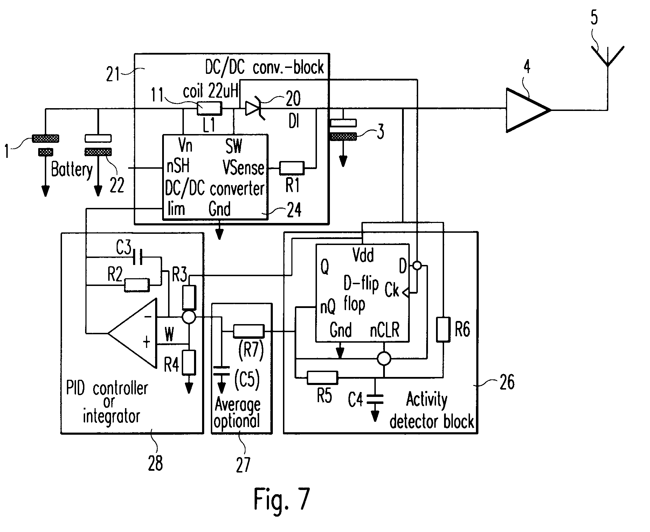

In figure 7, a power circuit with a feedback loop outside a DC/DC converter block 21 using digital signal processing is shown. Another capacitor 22, which is similar in function as the capacitor 3, is provided between the battery 1 and DC/DC converter block 21. The voltage from the battery 1 and the capacitor 22, respectively, is supplied to the coil 11 and an voltage input terminal of the DC/DC converter 24. The output of the coil 11 is connected to a switch terminal of the DC/DC converter 24 and the Zener diode 20. The output of the Zener diode 20 is supplied to a voltage or switch sense terminal of the DC/DC converter 24 and also to a capacitor 3 and the power amplification stage 4. The switch terminal of the DC/DC converter 24 is supplied to the clock terminal of a D-flipflop 25 serving as activity detector in an activity detector block 26. The voltage provided by the capacitor 3 serves as operating voltage of the D-flipflop 25. The D-flipflop 25 thus detects the activity of the switch of the DC/DC converter 24. The nQ output of the D-flipflop 25 provides the detected activity converted from a frequency into a voltage to an average means 27, which can be provided optionally. If the nQ output of the D-flipflop 25 stays low too long, which means that the switch point is left high, it is reset indicating an inactive state. The output of the averaging means 27 is supplied to a PID controller or integrator 28. The reference voltage also supplied to the PID controller or integrator 28 is set by corresponding resistors in combination with the voltage from the capacitor 3 as operating voltage. The output of the PID controller or integrator 28 is supplied to the current limiter terminal of the DC/DC converter 24 to correspondingly adjust the current through the coil 11.

## Claims

1. Power circuit for supplying power to an intermittently operated amplification means (4), comprising
a battery (1) having a full charged voltage lower than the operating voltage of the amplification means (4),
a stepping up means (2) for stepping up the voltage of the battery (1), and
a storing means (3) for storing the stepped up power and for supplying the stored power to said amplification means (4) only when said amplification means is operated,
**characterized by**
a feed back loop for feed back controlling the stepped up voltage, said feed back loop comprising an activity detection means (6) for detecting the activity level of the stepping up means (2).

2. Power circuit according to claim 1,
**characterized in,**
that said stepping up means (2) comprises a current limiting means which is controlled by the feed back loop.

3. Power circuit according to claim 1 or 2,
**characterized in,**
that the feed back loop is implemented in the stepping up means (2).

4. Power circuit according to claim 1, 2 or 3,
**characterized in,**
that the feed back loop further comprises an adjusting means (8) supplied with the detected activity level from the activity detection means (6) and with a reference signal for adjusting the stepped up voltage.

5. Power circuit according to one of the preceding claims,
**characterized in,**
that the stepping up means (2) comprises a switch which is intermittently operated corresponding to the amplification means (4) to switch the stepping up means (2) on and off, whereby the activity detection means (6) detects the activity level of the switch.

6. Power circuit according to one of the preceding claim,
**characterized in,**
that the activity detection means (6) detects the activity level in form of a frequency and converts the detected frequency into a voltage.

7. Power circuit according to one of the preceding claims,
**characterized in,**
that an averaging means (27) is provided in the feed back loop between the activity detection means and the adjusting means.

8. Power circuit according to one of the preceding claims,
**characterized in,**
that the stepping up means is a DC/DC converter.

9. Power circuit according to one of the preceding claims,
**characterized in,**
that the adjusting means (8) is an integrator or an PID controller.

10. Method for controlling a power circuit for supplying power to an intermittently operated amplification means, comprising the steps of
stepping up the voltage of a battery having a full charged voltage lower than the operating voltage of the amplification means in a stepping up means,
storing the stepped up power in a storing means, and
supplying the stored power to said amplification circuit only when said amplification circuit is operated,
**characterized by**
feed back controlling the stepped up voltage by means of detecting the activity level of the stepping up means.

11. Method for controlling a power circuit according to claim 10,
**characterized in,**
that the stepping up means comprises a current limiting means which is controlled by the feed back loop.

12. Method for controlling a power circuit according to claim 10 or 11,
**characterized in,**
that the step of feed back controlling is implemented in the stepping up means.

13. Method for controlling a power circuit according to one of the claims 10 to 12,
**characterized in**,
that the step of feed back controlling further comprises the step of adjusting the stepped up voltage by means of the detected activity level and a reference signal.

14. Method for controlling a power circuit according to claim 13,
**characterized in,**
that an averaging step is performed before said adjusting step.

15. Method for controlling a power circuit according to claim 13 or 14,
**characterized in,**
that said adjusting step is an integrating step or an PID controlling step.

16. Method for controlling a power circuit according to one of the claims 10 to 15,
**characterized in,**
that the stepping up means comprises a switch which is intermittenily operated corresponding to the amplification circuit to switch the stepping up means on and off, whereby the activity level of the switch is detected.

17. Method for controlling a power circuit according to one of the claims 10 to 16,
**characterized in,**
that in said step of detecting the activity level the activity level is detected in form of a frequency and the detected frequency is converted into a voltage.

18. Method for controlling a power circuit according to one of the claims 10 to 17,
**characterized in,**
that the stepping up step comprises the step of DC/DC converting the battery voltage.
